# FASCICULE DE BREVET EUROPEEN

(11) **EP 1 893 398 B1**
(45) Date de publication et mention de la délivrance du brevet: **19.10.2011**
(21) Numéro de dépôt: 06778598.0
(22) Date de dépôt: 15.06.2006
(51) Int. Cl.: B29C 70/20

(54) **PROCEDE DE REALISATION D'UN RENFORT POUR MATERIAU COMPOSITE A PROFIL DE RESISTANCE VARIABLE, RENFORT OBTENU**
VERFAHREN ZUR HERSTELLUNG EINER VERSTÄRKUNG FÜR EINEN VERBUNDWERKSTOFF MIT VARIABLEM BESTÄNDIGKEITSPROFIL UND AUF DIESE WEISE HERGESTELLTE VERSTÄRKUNG
METHOD FOR MAKING A REINFORCEMENT FOR COMPOSITE MATERIAL WITH VARIABLE RESISTANCE PROFILE, RESULTING REINFORCEMENT

(30) Priorité: 15.06.2005 FR 0551637
(43) Date de publication de la demande: 05.03.2008
(73) Titulaire: Saertex France, 38510 Arandon (FR)
(72) Inventeur: WAGENER, Gert, 48282 Emsdetten (DE); KLETHI, Thierry, 01300 Saint Benoit (FR)
(74) Mandataire: Fantin, Laurent
(86) Numéro de dépôt international: PCT/FR2006/001356
(87) Numéro de publication internationale: WO 2006/134271

(56) Documents cités:
- EP-A- 1 419 875
- FR-A- 2 238 000
- US-A- 5 895 622

## Description

La présente invention concerne un procédé de réalisation d'un renfort pour matériau composite à profil de résistance variable. L'invention couvre aussi le renfort obtenu et le produit composite incluant au moins un renfort obtenu par la mise en oeuvre du procédé.

On connaît le principe général des matériaux composites de plus en plus utilisés dans tous les domaines, qu'il s'agisse de produits pour le sport, de produits dans le domaine nautique ou des véhicules pour ne citer que quelques exemples.

Ce principe général consiste à inclure dans une matrice en polymère un renfort. Ce renfort sert à conférer au matériau composite l'essentiel de sa résistance mécanique. Ces renforts sont généralement des fibres en matériau naturel mais plus généralement de synthèse et très communément des fibres de verre.

En fonction des diamètres des fibres, de leurs longueurs, de leur nature, en fonction des agencements internes des nappes de fibres tissées, non tissées, cousues, collées ou soudées, en fonction de leurs dispositions, des natures des polymères constituant la matrice, on obtient une combinaison infinie de réalisations en fonction des besoins et des applications.

En fonction des besoins, on peut être amené à avoir la nécessité de renforcer une zone plutôt qu'une autre.

Dans ce cas, il est connu de disposer dans cette zone une pièce de renfort, si nécessaire découpée en fonction du profil de la zone qui est superposée au renfort continu de la pièce.

Ceci évite de disposer un renfort continu de grande résistance sur toute la surface alors que seule une zone délimitée nécessite une résistance importante. Il existe un autre problème qui n'est actuellement pas résolu et que le procédé selon la présente invention se propose de solutionner.

En effet, on prend comme exemple la réalisation d'une planche de ski ou de snow board, ceci étant totalement illustratif et aucunement limitatif comme application, on constate de façon générale qu'il est prévu une superposition de couches de renforts noyés dans une matrice en résine ou en polymère thermoplastique.

Le produit brut une fois obtenu est découpé puis subit des finitions.

Durant l'étape de réalisation de la planche brute, les renforts sont superposés et la résistance sur toute la longueur est identique et correspondant au moins à la résistance la plus élevée nécessaire à savoir la zone la plus sollicitée de ladite planche.

Il est possible de disposer des couches supplémentaires de renfort au milieu de la planche dans la zone la plus sollicitée. On comprend qu'il y a plusieurs inconvénients à cette solution.

Tout d'abord cela crée une surépaisseur dans la zone comportant le renfort.

De plus, la planche obtenue ne présente pas des caractéristiques optimales car la transition de la zone non renforcée à la zone renforcée n'est pas bonne.

La résistance générale de la planche est également perturbée car il n'y a pas de continuité d'un bout à l'autre des fibres. La progressivité des déformations sous contraintes sur la longueur n'est plus assurée et la courbure n'est plus homogène.

Economiquement, on constate aussi les inconvénients qui en découlent. Dans le cas où le renfort est inutilement prolongé sur toute la longueur, le fabriquant perd non seulement la partie du renfort inutile dans la planche finie mais aussi le renfort inutile de la partie découpée et considérée comme un déchet.

Le procédé de l'art antérieur conduit aussi à générer plus de recyclage de déchets.

Le procédé selon la présente invention permet de pallier ces problèmes en proposant d'utiliser des fibres continues dans la direction principale de sollicitation mais avec une résistance renforcée dans au moins une zone par une répartition différente.

L'invention selon la présente invention est maintenant décrite selon un mode de réalisation particulier, non limitatif, ce mode de réalisation étant illustré par un exemple particulier, non limitatif, ledit exemple étant l'objet des dessins annexés qui représentent :
- figure 1A, une vue de dessus d'un renfort simple obtenu par le procédé selon la présente invention,
- figures 1B et 1C deux coupes transversales du renfort de la figure 1A respectivement selon les lignes 1B-1B et 1C-1C,
- figures 2A et 2B, deux vues en coupe transversale d'un renfort plus complexe obtenu par le même procédé, suivant les lignes de coupe identiques à celles de la figure 1A,
- figures 3A et 3B, deux vues d'un premier moyen à pivotement pour permettre la mise en oeuvre du procédé afin d'obtenir un renfort simple,
- figures 3C et 3D, deux vues complémentaires des dessus pour faciliter la lecture des figures 3A et 3B,
- figures 4A et 4B, deux vues d'un deuxième mode de réalisation à translation pour permettre la mise en oeuvre du procédé afin d'obtenir un renfort simple,
- figures 5A et 5B, deux vues d'un troisième mode de réalisation à déploiement pour permettre la mise en oeuvre du procédé afin d'obtenir un renfort simple, et
- figure 6, une vue schématique illustratif d'une planche de snow board obtenue à partir du renfort obtenu selon le procédé de l'invention.

Le procédé selon la présente invention est maintenant décrit en détail dans un premier temps en regard des figures.

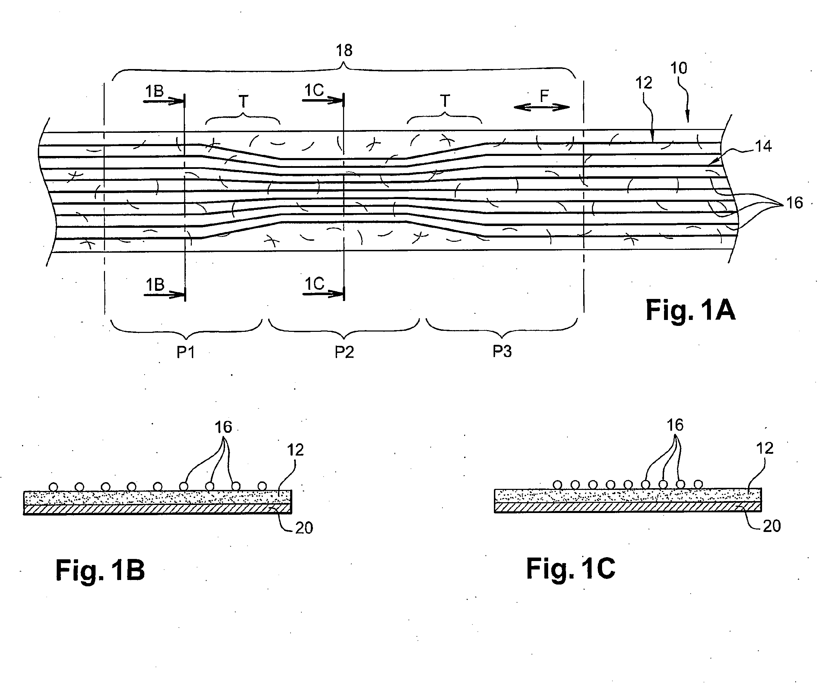

Sur la figure 1A, on a représenté un renfort 10 composé d'une première nappe 12 par exemple en non tissé de fibres de verre sur la face supérieure de laquelle est prévue une deuxième nappe 14.

La deuxième nappe 14 est constituée de fils 16 continus, orientés dans le sens longitudinal, dans le cas présent, indiqué par la flèche F.

Le procédé travaille en continu et il permet de reproduire des modules 18, par exemple pour la réalisation d'une planche de snow board.

Chaque module comprend trois zones principales P1, P2 et P3 non compris les zones de transition T.

Dans la première zone P1 par exemple, les fils 16 de renfort sont continus, disposés parallèlement à la direction longitudinale F, et espacés les uns des autres.

Ensuite la zone suivante principale P2 est une zone dans laquelle l'écart des fils 16 de renfort est modifié et en l'occurrence, cet écart est diminué.

Entre ces deux zones, il est prévu une zone T de transition puisque les fils sont continus.

En sortie de la zone P2 centrale, on retrouve dans cette application à une planche de snow board, une zone de transition T pour revenir dans la zone P3 à des écarts de fils 16 de renfort, identiques à ceux de la zone P1.

Dans l'application retenue, l'agencement présente une symétrie totale sans que cela n'ait à être considéré comme une obligation.

Ces fils de renfort prévus pour être rapportés sur une base, dans le cas représenté, la nappe 12, doivent être fixés pour que les écarts soient maintenus jusqu'à ce que le renfort se trouve rapporté et noyé dans la matrice polymère. A cet effet, il est possible de recourir à tous les moyens de fixation tels que du collage ou des coutures par exemple.

Les vues en coupe montrent la superposition des deux nappes 12 et 14.

On note que dans la zone P2, représentée figure 1C, les fils sont rapprochés. Il est entendu que les figures sont schématiques et que suivant les produits, les fils se trouvent aplatis, notamment en cas de coutures.

Sur les figures 1, on a aussi représenté une troisième couche 20 en partie inférieure, sous la première couche 12 qui est une couche de finition, par exemple un voile.

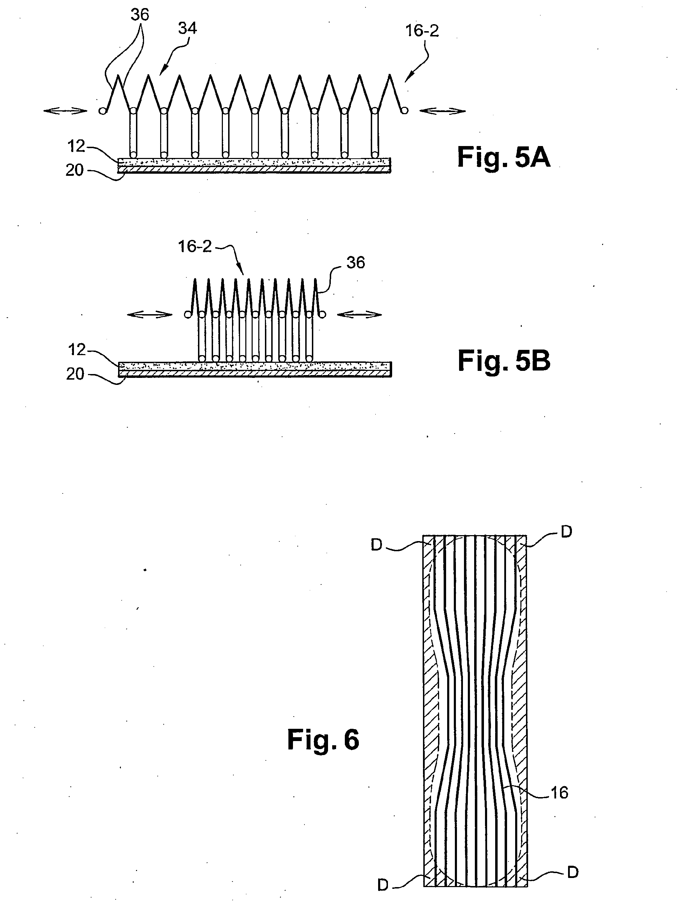

Le procédé conduit à l'obtention d'un produit qui est représenté sur la figure 6. On note qu'une fois que un ou plusieurs renforts sont noyés dans une résine polymère et que la réticulation a été obtenue, le produit est généralement prêt à la découpe.

Dans le cas représenté, il s'agit d'une planche de snow board, et la découpe est représentée en trait discontinu sur cette figure 6.

On constate que dans la zone centrale P2, les fils 16 sont densifiés par rapport à la surface étroite et donc réduite, ce qui procure une résistance importante dans cette zone fortement sollicitée mécaniquement et devant présenter une rigidité importante.

Dans les zones d'extrémité P1 et P3, les fils sont espacés et la densité est plus faible conférant une plus faible résistance mécanique de cette zone plus faiblement sollicitée mais une souplesse plus importante, ce qui est une nécessité pour conférer à la planche de bonnes qualités.

Les zones de transition T peuvent être adaptées pour être graduelles avec la proportionnalité souhaitée.

La résistance de l'ensemble est par contre tout à fait préservée par la continuité des fils de renfort. Cette continuité permet aussi de transmettre les efforts et de lier les différentes parties avant, médiane et arrière.

On note aussi que les déchets D sont optimisés et que les fils de renfort sont utilisés dans leur quasi intégralité. Dans ce mode de réalisation, des calculs ont montré qu'il y avait une économie de 25% de matière première utilisée.

Le poids du produit fini est aussi optimisé puisqu'il n'a pas fallu densifier les fils 16 de renfort dans les zones d'extrémité comme dans la zone médiane.

Dans le sens transversal, la résistance peut être améliorée ou modifiée mais ceci de façon connue par intégration de fils de renforts dans le sens transversal, de façon régulière, lors de la fabrication de la première nappe 12.

Le procédé est applicable à tout produit dans lequel il est souhaitable de modifier la résistance mécanique d'un matériau composite dans une zone donnée, suivant une direction donnée.

Il est possible d'adapter le procédé à une infinité de variantes car la nature des fils de renfort, le diamètre, le type de fils de renfort, le nombre, les écarts, les longueurs, le nombre de zones de transition, l'angulation sont autant de paramètres modifiables et ajustables.

Sur la figure 1A, il a été illustré un mode de réalisation simple mais il est possible aussi de prévoir plusieurs variations successives, différentes sur la longueur des mêmes fils de renfort.

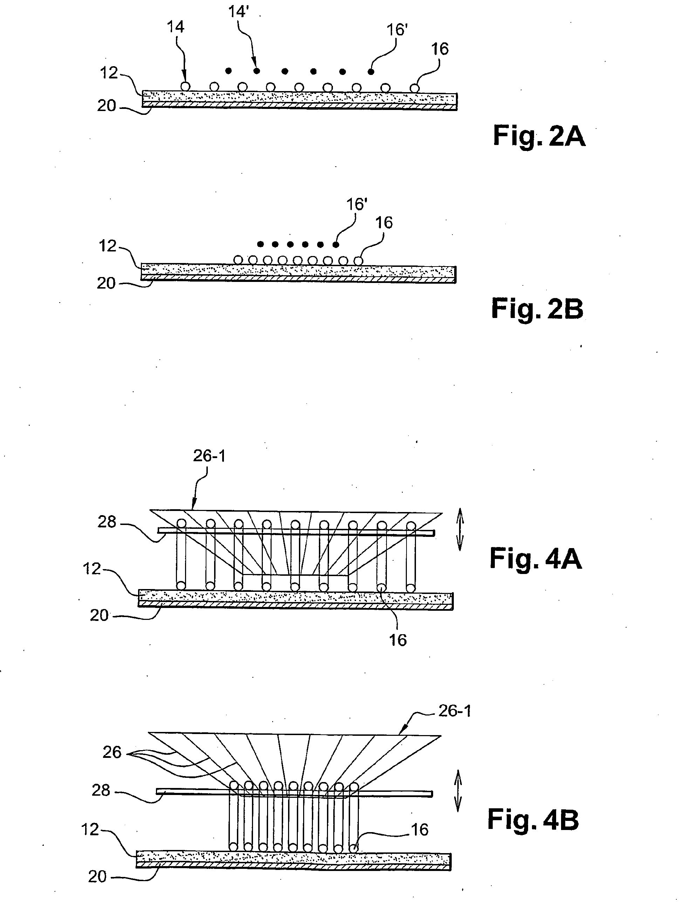

Le renfort 10 obtenu par le procédé selon l'invention peut aussi comporter une succession de nappes et sur les figures 2A et 2B, on a représenté une superposition de deux couches 14 et 14' de fils 16 et 16' de renfort.

Dans ce cas, il est possible d'atteindre un grand nombre de combinaisons en intervenant sur les diamètres, les écarts, les superpositions ou non de zones densifiées et tous les autres paramètres déjà évoqués.

La fabrication des renforts est réalisée en continu si bien que les modules tels que 18 se succèdent.

Il est donc nécessaire de recourir à des dispositifs adaptés pour obtenir un résultat précis, répétitif et apte à travailler à des vitesses élevées.

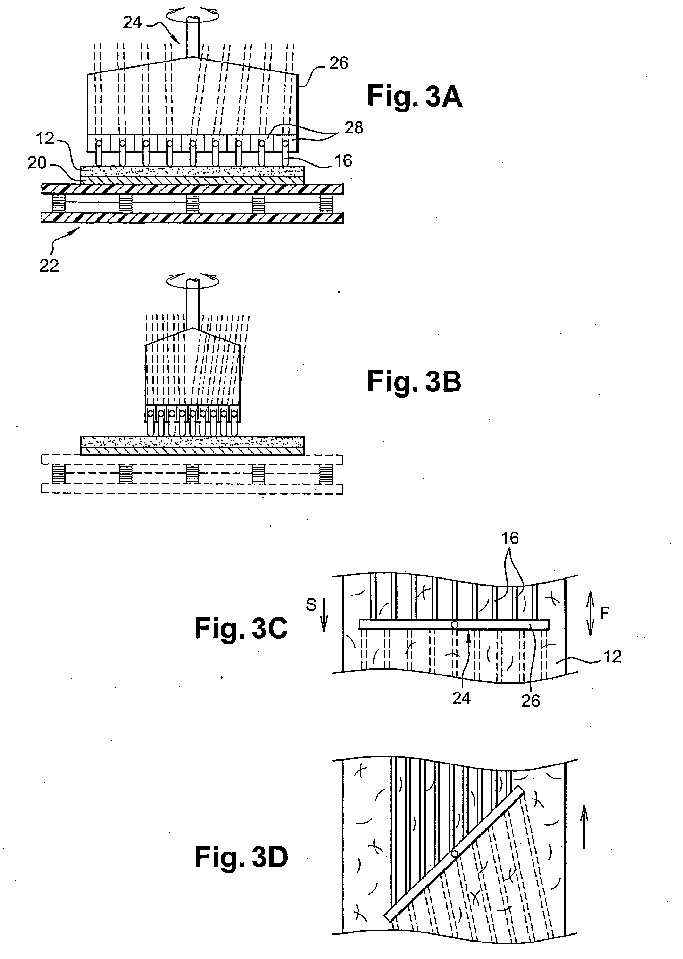

Un premier mode de réalisation est illustré sur les figures 3A à 3D.

Ce dispositif comprend de façon connue un convoyeur 22 sur lequel est positionné un complexe constitué de la nappe 12 et de la nappe 20, sur lequel il convient de déposer la nappe 14 constituée des fils 16.

Les fils 16 issus de bobines passent à travers des moyens 24 de répartition à écart variable. Ces moyens comprennent dans le mode de réalisation représenté un guide horizontal 26 apte à prendre une position transversale à la direction longitudinale F comme montré sur les figures 3A et 3C, dans le sens de défilement S. Ce guide 26 comprend des passages 28 indépendants les uns des autres.

Le nombre et les écarts entre les passages sont adaptés aux écarts de base recherchés pour effectuer la dépose des fils de la nappe 14 lorsque le guide est perpendiculaire.

Lorsque l'écart doit être réduit, comme montré sur les figures 3B et 3D, le guide est orienté pour former un angle incident différent de 90°, d'autant plus éloigné de 90° que l'on souhaite diminuer les écarts entre les fils 16.

La vitesse de rotation du guide pour une vitesse d'avance donnée dans le sens S conditionne le profil de la zone de transition T correspondante.

Un inconvénient dans certaines réalisations que pose ce mode de réalisation est celui de conduire à des déposes de fils décalés aux extrémités des zones de transition. Il est donc possible d'incliner le guide pour compenser mais cela peut compliquer l'agencement.

Une variante représentée sur les figures 4A et 4B vise à recourir à un guide 26-1 qui comprend des espacements avec des parois inclinées, ledit guide étant mobile verticalement.

Des moyens de délivrance des fils 16 sont associés audit guide.

Ainsi lorsque l'on fait varier la position relative du guide 26-1 et des moyens de maintien, les fils sont logés en partie inférieure ou supérieure. Comme les parois sont inclinées, il est ainsi possible de faire varier l'écart entre les fils 16.

Le mouvement relatif peut être obtenu soit par déplacement du guide, soit par déplacement des moyens de délivrance, soit les deux.

Selon une autre variante, le guide 26-2 est un support 34 à branches 36 articulées apte à prendre différentes positions provoquant, comme montré sur les figures 5A et 5B, des écarts différents suivant que les branches sont écartées ou resserrées.

Les représentations sont schématiques et il est possible de prévoir d'autres variantes et notamment de disposer des poulies de guidage sur un support avec des écarts variables moyennant des mouvements de cames.

## Revendications

1. Procédé de réalisation d'un renfort (10) pour matériau composite comprenant au moins deux nappes (12, 14) destinées à être noyées dans une matrice polymère, **caractérisé en ce que** au moins l'une (14) des nappes est constituée de fils (16) continus dans une direction principale F et **en ce que** l'on dispose ces fils avec un écartement variable le long de cette direction principale F.

2. Procédé de réalisation d'un renfort (10) selon la revendication 1, **caractérisé en ce que** les fils (16) de l'une (14) au moins des nappes sont solidarisés à au moins une autre nappe.

3. Procédé de réalisation d'un renfort (10) selon la revendication 1 ou 2, **caractérisé en ce que** les fils sont solidarisés par collage ou couture.

4. Procédé de réalisation d'un renfort (10) selon l'une quelconque des revendications précédentes, **caractérisé en ce qu'**il comprend plusieurs nappes (14, 14') de fils (16, 16') à écarts variables.

5. Dispositif de mise en oeuvre du procédé selon les revendications 1 à 4, comprenant un convoyeur (22) sur lequel est positionnée au moins une nappe (12), des moyens (24) de répartition à écart variable pour déposer la nappe (14) constituée des fils (16), **caractérisé en ce que** ces moyens (24) de répartition à écart variable comprennent un guide horizontal (26) apte à prendre une position transversale à la direction principale F , muni de passages (28) indépendants les uns des autres, ledit guide étant apte à prendre différentes positions angulaires de sorte à faire varier les écarts entre les fils (16).

6. Dispositif de mise en oeuvre du procédé selon les revendications 1 à 4, comprenant un convoyeur (22) sur lequel est positionnée au moins une nappe (12), des moyens (24) de répartition à écart variable pour déposer la nappe (14) constituée des fils (16), **caractérisé en ce que** ces moyens (24) de répartition à écart variable comprennent un guide (26-1) qui comprend des espacements avec des parois inclinées, des moyens de délivrance des fils (16), ledit guide et les moyens de délivrance étant mobiles l'un par rapport à l'autre.

7. Dispositif de mise en oeuvre du procédé selon les revendications 1 à 4, comprenant un convoyeur (22) sur lequel est positionnée au moins une nappe (12), des moyens (24) de répartition à écart variable pour déposer la nappe (14) constituée des fils (16), **caractérisé en ce que** ces moyens (24) de répartition à écart variable comprennent un support (34) à branches (36) articulées aptes à prendre différentes positions provoquant des écarts différents suivant que lesdites branches sont écartées ou resserrées.

## Claims

1. A method of producing a reinforcement (10) for composite material, comprising at least two layers (12, 14) intended to be embedded in a polymer matrix, **characterised in that** at least one (14) of the layers consists of continuous fibres (16) in a principal direction F and **in that** these fibres are disposed with a variable separation along this principal direction F.

2. A method of producing a reinforcement (10) according to claim 1, **characterised in that** the fibres (16) in at least one (14) of the layers are secured by means of another layer.

3. A method of producing a reinforcement (10) according to claim 1 or 2, **characterised in that** the fibres are secured by adhesive bonding or stitching.

4. A method of producing a reinforcement (10) according to any one of the preceding claims, **characterised in that** it comprises several layers (14, 14') of fibres (16, 16') at variable separations.

5. A device for implementing the method according to claims 1 to 4, comprising a conveyor (22) on which at least one layer (12) is positioned, variable-separation distribution means (24) for depositing the layer (14) comprising fibres (16), **characterised in that** the variable-separation distribution means (24) comprises a horizontal guide (26) able to adopt a position transverse to the principal direction F, provided with passages (28) independent of one another, said guide being able to adopt different angular positions so as to vary the separations between the fibres (16).

6. A device for implementing the method according to claims 1 to 4, comprising a conveyor (22) on which at least one layer (12) is positioned, variable-separation distribution means (24) for depositing the layer (14) comprising fibres (16), **characterised in that** the variable-separation distribution means (24) comprises a guide (26-1) that comprises spacings with inclined walls, and means of delivering the fibres (16), said guide and said delivery means being movable with respect to each other.

7. A device for implementing the method according to claims 1 to 4, comprising a conveyor (22) on which at least one layer (12) is positioned, variable-separation distribution means (24) for depositing the layer (14) comprising fibres (16), **characterised in that** the variable-separation distribution means (24) comprises a support (24) with articulated branches (36) able to adopt different position causing different separations depending on whether said branches are separated or close together.

## Patentansprüche

1. Verfahren zur Herstellung einer Verstärkung (10) für Verbundwerkstoff, die wenigstens zwei Lagen (12, 14) umfasst, welche dazu bestimmt sind, in eine Polymermatrix eingebettet zu werden, **dadurch gekennzeichnet, dass** wenigstens eine (14) der Lagen aus in einer Hauptrichtung F durchgehenden Fasern (16) besteht und dass diese Fasern mit einem variablen Abstand entlang dieser Hauptrichtung F angeordnet werden.

2. Verfahren zur Herstellung einer Verstärkung (10) nach Anspruch 1, **dadurch gekennzeichnet, dass** die Fasern (16) von wenigstens einer (14) der Lagen mit wenigstens einer weiteren Lage fest verbunden sind.

3. Verfahren zur Herstellung einer Verstärkung (10) nach Anspruch 1 oder 2, **dadurch gekennzeichnet, dass** die Fasern durch Klebern oder Nähen fest verbunden sind.

4. Verfahren zur Herstellung einer Verstärkung (10) nach einem der vorhergehenden Ansprüche, **dadurch gekennzeichnet, dass** sie mehrere Lagen (14, 14') aus Fasern (16, 16') mit variablen Abständen umfasst.

5. Vorrichtung für die Durchführung des Verfahrens nach den Ansprüchen 1 bis 4, umfassend eine Fördereinrichtung (22), auf der wenigstens eine Lage (12) angeordnet ist, Mittel (24) zur Verteilung mit variablem Abstand, um die aus den Fasern (16) bestehende Lage (14) aufzulegen, **dadurch gekennzeichnet, dass** diese Mittel (24) zur Verteilung mit variablem Abstand eine Horizontalführung (26), geeignet, eine Querstellung zu der Hauptrichtung F einzunehmen, umfassen, die mit voneinander unabhängigen Durchgängen (28) versehen ist, wobei die Führung geeignet ist, unterschiedliche Winkelstellungen einzunehmen, um die Abstände zwischen den Fasern (16) zu variieren.

6. Vorrichtung für die Durchführung des Verfahrens nach den Ansprüchen 1 bis 4, umfassend eine Fördereinrichtung (22), auf der wenigstens eine Lage (12) angeordnet ist, Mittel (24) zur Verteilung mit variablem Abstand, um die aus den Fasern (16) bestehende Lage (14) aufzulegen, **dadurch gekennzeichnet, dass** diese Mittel (24) zur Verteilung mit variablem Abstand eine Führung (26-1), die Zwischenräume mit geneigten Wänden aufweist, und Mittel zur Abgabe der Fasern (16) umfassen, wobei die Führung und die Abgabemittel zueinander beweglich sind.

7. Vorrichtung für die Durchführung des Verfahrens nach den Ansprüchen 1 bis 4, umfassend eine Fördereinrichtung (22), auf der wenigstens eine Lage (12) angeordnet ist, Mittel (24) zur Verteilung mit variablem Abstand, um die aus den Fasern (16) bestehende Lage (14) aufzulegen, **dadurch gekennzeichnet, dass** diese Mittel (24) zur Verteilung mit variablem Abstand einen Träger (34) mit angelenkten Schenkeln (36) umfassen, die geeignet sind, unterschiedliche Positionen einzunehmen, welche unterschiedliche Abstände bewirken, je nachdem, ob die Schenkel voneinander entfernt oder enger zusammengerückt sind.
